# EUROPEAN PATENT APPLICATION

(11) **EP 4 474 401 A1**
(43) Date of publication of application: **11.12.2024**
(21) Application number: 23177978.6
(22) Date of filing: 07.06.2023
(51) Int. Cl.: C08G 18/10, C08G 18/32, C08G 18/38, C08G 18/42, C08G 18/76

(54) **USE OF POLYURETHANE ELASTOMERS BASED ON OR USE OF KIT-OF-PARTS COMPRISING MDI-POLYADIPATE PREPOLYMERS AND POLYAMINE CHAIN-EXTENDERS IN PULP AND PAPER APPLICATIONS, PREFERABLY IN THE MANUFACTURE OF DIE CUTTING PADS, ANVIL COVERS, ROLLERS AND ZERO CRUSH WHEELS, AS WELL AS IN THE MANUFACTURE OF WHEELS**

(71) Applicant: Covestro Deutschland AG, 51373 Leverkusen (DE)
(72) Inventor: Vigouroux, Helene, 38121 CHONAS L'AMBALLAN (FR); Bonanad, Eric, 26300 BARBIERES (FR); Monnet, Anne-Marie, 26380 PEYRINS (FR); Leger, David, 26600 SERVES SUR RHONE (FR); Vartabedian, Cedric, 26100 ROMANS SUR ISERE (FR); Dimeck, Clementine, 38840 SAINT LATTIER (FR)
(74) Representative: Levpat

(57) **Abstract**

The present invention relates to the use of polyurethane elastomers based on and to the use of kit-of-parts comprising MDI-polyadipate prepolymers and polyamine chain-extenders in pulp and paper applications, especially in the manufacture of die cutting pads, anvil covers, zero crush wheels, rollers and wheels wherein the resulting products exhibit good dynamic performances, especially in terms of elongation and tear resistance.

## Description

In 2004, the European Committee issued a directive (2004/37/EC) on the protection of employees from the risks related to exposure to carcinogens or mutagens at work. This directive was tightened in 2017 (2017/2389) to work towards a point where the use of these agents will be prohibited. 4,4'-methylenebis (2-chloroaniline) (MOCA or MBOCA) has been labelled as a carcinogen under this directive. MOCA is mainly used as a hardener for polyurethane prepolymers in the manufacture of castable polyurethane products such as anvil covers, die cutting pads, zero crush wheels and wheels. These products have so far been manufactured predominantly from TDI-based prepolymers and MOCA as curative (chain extender). Other diamines have been used in combination with these prepolymers, such as 3-(Aminomethyl)-3,5,5-trimethylcyclohexan-1-amine (IPDA), 2,4-Diethyl-6-methylbenzene-1,3-diamine (DETDA), 3,5-dimethylthio-2,4-toluenediamine and 3,5-dimethylthio-2,6-toluenediamine (DMTDA). However, the direct replacement of MOCA by these diamines does not lead to the same performance in these applications, which puts a dynamic strain on the material (see experimental part). Therefore, an alternative polyurethane system had to be developed to replace MOCA without losing the dynamic performance of the material. In accordance with the present invention it has been surprisingly found that the use of polyurethane elastomers based on MDI-polyadipate prepolymers and polyamine chain-extenders in the manufacture of die cutting pads, anvil covers, rollers, zero crush wheels and wheels leads to good dynamic performances of these products, in particular in terms of elongation and tear resistance.

WO01/40340A2 discloses polyurethane elastomers obtainable from MDI-based prepolymers and diol and/or diamine curatives, wherein the MDI-based prepolymers are based on a polyol mixture of a short chained polyol and a long chained polyol. Polyethers, polycarbonate polyols, hydrocarbon polyols and also polyesters are listed as suitable long-chained polyols. However the polyesters are not further specified in terms of their building components. It is evident from the examples that the use of polyethers is preferred. Polyether-based MDI-prepolymers are not suitable for use in the preparation of anvil covers, die cutting pads, zero crush wheels and wheels, since they lead to a low performance in terms of tear resistance. WO01/40340A2 does not disclose polyurethane elastomers based on the specific combination of MDI-polyadipate prepolymers and polyamine chain-extenders and does not refer to the use of polyurethan elastomers in pulp and paper applications or in the manufacture of wheels.

WO2022/238285A1 discloses polyurethane elastomers obtainable from NCO-terminated prepolymers, which are preferably derived from TDI or MDI and from polyethers or polyesters, wherein in the latter case polyadipates are preferred. Apart from the NCO-terminated prepolymers the reaction mixture obligatorily contains polyether carbonate polyols and optionally polyamine and/or polyol chain extenders. The use of MDI-polyadipate-prepolymers in combination with exclusively polyamine chain-extenders or polyamine/polyol chain extenders as the main components is not disclosed.

The International Application with the number PCT/EP2022/084392 (priority date December 8, 2021) discloses polyurethane elastomers obtainable from NCO-terminated prepolymers, which are preferably derived from TDI or MDI and from polyethers or polyesters. Apart from the NCO-terminated prepolymers the reaction mixture obligatorily contains a polyol mixture, obtainable by mixing polyester polyols and carbodiimides, and as a further component polyamine and/or polyol chain extenders. This International Application does not disclose the use of NCO-terminated prepolymers which are based on polyadipate polyols and have a residual monomeric diisocyanate content of at most 8 weight %.

The present invention relates to the use of a polyurethane elastomer,
obtained from (embodiment I) or obtainable from (embodiment II) the reaction (R_{E}) of
(A) at least one NCO-terminated prepolymer, obtainable or obtained from the reaction (R_{P}) of
   (A1) at least one diphenylmethane diisocyanate, optionally modified by urethane- and/or carbodiimide-groups,
   (A2) at least one polyadipate polyol, with a number-average molar mass Mn of from 800 to 4000 g/mol, determined by gel permeation chromatography as specified below, and a functionality of 2 to 4,
   (A3) optionally at least one lactone-based polyester polyol and
   (A4) optionally at least one catalyst and/or at least one additive,
(B) at least one chain extender, which is one of
   i) at least one polyamine with a functionality of at least 2, or
   ii) a mixture of at least one polyamine with a functionality of at least 2 and at least one polyol with a functionality of at least 2,
(C) optionally at least one catalyst,
(D) optionally at least one additive and
(E) optionally at least one filler,
   with the provisio that no polyether carbonate polyols are present in the reaction (R_{E}),
   and with the provisio that in embodiment II component (A) has a monomeric diisocyanate content of ≤ 8 weight %, preferably ≤ 6 weight %, determined by gas chromatography with an internal standard to DIN EN ISO 10283:2007-11,
in pulp and paper applications or in the manufacture of wheels.

The present invention also relates to the use of a kit-of-parts, consisting of (embodiment III) or comprising (embodiment IV)
(A) at least one NCO-terminated prepolymer, obtainable or obtained from the reaction (R_{P}) of
   (A1) at least one diphenylmethane diisocyanate, optionally modified by urethane- and/or carbodiimide-groups,
   (A2) at least one polyadipate polyol, with a number-average molar mass Mn of from 800 to 4000 g/mol, determined by gel permeation chromatography as specified below, and a functionality of 2 to 4,
   (A3) optionally at least one lactone-based polyester polyol and
   (A4) optionally at least one catalyst and/or at least one additive,
(B) at least one chain extender, which is one of
   i) at least one polyamine with a functionality of at least 2, or
   ii) a mixture of at least one polyamine with a functionality of at least 2 and at least one polyol with a functionality of at least 2,
(C) optionally at least one catalyst,
(D) optionally at least one additive and
(E) optionally at least one filler,
   with the provisio that no polyether carbonate polyols are present in the kit-of-parts,and with the provisio that in embodiment IV component (A) has a monomeric diisocyanate content of ≤ 8 weight %, preferably ≤ 6 weight %, determined by gas chromatography with an internal standard to DIN EN ISO 10283:2007-11,
in pulp and paper applications or in the manufacture of wheels.

In a preferred embodiment of embodiment I and in a preferred embodiment of embodiment III component (A) has a monomeric diisocyanate content of ≤ 8 weight %, preferably ≤ 6 weight %, determined by gas chromatography with an internal standard to DIN EN ISO 10283:2007-11.

According to the present invention the wording "elastomeric" or "elastomer" means a polyurethane having/alternance of polyols macromolecular chains corresponding to "soft segment", with urethane reticulation bonding to short segments called "hard segment" composed of urethane bonding.

The single components of the polyurethane elastomer and/or the kit-of-parts used according to the present invention will be described in detail in the following.

### NCO-terminated prepolymer(s) (A):

### Optionally modified diphenylmethane diisocyanate(s) (A1):

The at least one diphenylmethane diisocyanate, optionally modified by urethane- and/or carbodiimide-groups, is preferably selected from the group consisting of diphenylmethane-4,4'-diisocyanate (4,4'-MDI), diphenylmethane-2,4'-diisocyanate (2,4'-MDI), diphenylmethane-2,2'-diisocyanate (2,2'-MDI), diphenylmethane-2,4'-diisocyanate (2,4'-MDI)/diphenylmethane-4,4'-diisocyanate (4,4'-MDI) mixtures, urethane-modified liquid diphenylmethane-4,4'-diisocyanates and diphenylmethane-2,4'-diisocyanates and carbodiimide-modified diphenylmethane-2,2'-diisocyanates, diphenylmethane-2,4'-diisocyanates and diphenylmethane-4,4'-diisocyanates.

The diisocyanates mentioned can be used individually or in the form of mixtures with one another.

Component (A1) is in general used in an amount of 2 to 30 wt. % based on the total weight of the at least one NCO-terminated prepolymer (A).

### Polyadipate polyol(s) (A2):

The at least one polyadipate polyol has a number-average molar mass Mn of from 800 to 4000 g/mol and preferably from 1500 to 2500 g/mol, wherein Mn has been determined by gel permeation chromatography.

The number-average molecular weight (Mn) was determined by gel permeation chromatography (GPC) in tetrahydrofuran at 23°C. The procedure is according to DIN 55672-1: "Gel permeation chromatography, Part 1 - Tetrahydrofuran as eluent" (SECurity GPC System from PSS Polymer Service, flow rate 1.0 ml/min; columns: 2×PSS SDV linear M, 8×300 mm, 5 µm; RID detector). Polystyrene samples of known molar mass are used for calibration. The number-average molecular weight is calculated with software support. Baseline points and evaluation limits are fixed in accordance with DIN 55672 Part 1.

The at least one polyadipate polyol has a functionality of 2 to 4 and preferably of 2.

Suitable polyadipate polyols can by way of example be produced from adipic acid and from polyhydric alcohols. For the production of the polyester polyols it can optionally be advantageous to use, instead of the adipic acid, the corresponding adipic acid derivatives, for example the carboxylic diesters having from 1 to 4 carbon atoms in the alcohol moiety, adipic acid anhydride, adipoyl chloride or mono carboxylic ester adipoyl chloride, having from 1 to 4 carbon atoms in the alcohol moiety, and mixtures thereof.

Examples of polyhydric alcohols are glycols having from 2 to 10, preferably from 2 to 6, carbon atoms, for example ethylene glycol, diethylene glycol, 1,4-butanediol, 1,5-pentanediol, 1,6-hexanediol, 1,10-decanediol, 1,12-dodecanediol, 2,2-dimethyl-1,3 propanediol (neopentyl glycol), 1,3-propanediol, and dipropylene glycol. The polyhydric alcohols can be used alone or optionally in a mixture with one another, as required by the desired properties.

Preferred polyadipate polyols used are ethanediol polyadipates, 1,4-butanediolpolyadipates, ethanediol-1,4-butanediol-polyadipates, 1,6-hexanediol neopentyl glycol polyadipates and 1,6-hexanediol-1,4-butanediol polyadipates.

The polyadipate polyols can be used individually or in the form of mixtures with one another.

Component (A2) is in general used in an amount of 70 to 98 wt. % based on the total weight of the at least one NCO-terminated prepolymer (A).

### Lactone-based polyester polyol(s) (A3):

Lactone-based polyester polyols comprise the polymerization products of lactones, for example of optionally substituted caprolactones. Preferred lactone-based polyester polyols are polycaprolactones. Component (A3) is in general used in an amount of 0 to 15 wt. %, based on the total weight of the at least one NCO-terminated prepolymer (A).

### Catalyst(s) and/or at least one additive(s) (A4):

The at least one diphenylmethane diisocyanate-terminated prepolymer (A) according to the present invention is obtainable in the presence of optionally at least one catalyst and / or at least one additive.

Suitable catalysts can optionally be used in the process of the invention. The conventional tertiary amines known from the prior art, e.g. triethylamine, dimethylcyclohexylamine, N-methylmorpholine, N,N'-dimethylpiperazine, 2-(dimethylaminoethoxy)ethanol, diazabicyclo[2.2.2]octane (DABCO), diethylethanolamine, N-cocomorpholine, N,N-diethyl-3-diethylaminopropylamine dimethylbenzylamine, 1,8-Diazabicycloundec-7-ene (DBU),triazabicyclodecene (TBD) and N-methyltriazabyclodecene (MTBD). Organometallic compounds, for example titanium compounds, iron compounds, bismuth compounds, zinc compounds, or tin compounds, for example tin diacetate, tin dioctanoate, tin dilaurate, or the dialkyltin salts of aliphatic carboxylic acids, for example dibutyltin diacetate or dibutyltin dilaurate, are suitable catalysts for the production of PU elastomers. Preferred catalysts are amine compounds and/or organometallic compounds, in particular tin compounds.

Suitable additives may be lubricants, for example fatty acid esters, metal soaps of these, fatty acid amides, fatty acid ester amides, and silicone compounds, anti-foaming agents, rheological agents such as viscosity regulator, jollification agents, antiblocking agents, inhibitors, stabilizers with respect to hydrolysis, UV or other light, heat, and discoloration.

In another preferred embodiment, additives used in small amounts may also be customary mono-, di-, tri- or polyfunctional compounds reactive toward isocyanates in proportions of 0.001 mol% up to 2 mol%, preferably of 0.002 mol% to 1 mol%, based on the total molar amount of component A, for example as chain terminators, auxiliaries or demoulding aids. Examples include alcohols such as methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n-octadecanol, cyclohexanol and stearyl alcohol. Examples of suitable triols are trimethylolethane, trimethylolpropane or glycerol. Suitable higher-functionality alcohols are ditrimethylolpropane, pentaerythritol, dipentaerythritol or sorbitol. Amines such as butylamine and stearylamine or thiols.

### Synthesis of the prepolymer (A):

The NCO-terminated prepolymer (A) is obtained from the components as mentioned before. The preparation of a prepolymer is in general known to the skilled artisan in the art. The NCO-terminated prepolymer (A) can be obtained as follows:
The provision of component (A 1) is in general done in a suitable reactor under suitable conditions known to the skilled artisan, for example under vacuum, with a stirrer, and at a temperature of preferably 40 to 100 °C.
Then the provision of the component (A2) and optionally (A3) and optionally (A4) is done in the same reactor under vacuum. The mixture is stirred preferably during 2 to 3 hours at a temperature between 40 and 100°C. Then the product is extracted and stored in a drum under nitrogen or vacuum.

Components (A1), (A2) and optionally (A3) are used in a molar ratio of isocyanate-groups of component (A1) to isocyanate-reactive groups of component (A2) and optionally (A3) (sum of both, if (A3) is present) of preferably 1.5 to 4 and more preferably 1.6 to 3.

The proportion of component (A), based on the total mass of the polyurethane elastomer is preferably 85% to 95% % by weight, particularly preferably 88% to 93% by weight, with the provision that the sum of components (A) and (B) in the polyurethane elastomer is 100% by weight.

### Component (B):

Component (B) according to the present invention is at least one chain extender, which is one of
i) at least one polyamine with a functionality of at least 2, or
ii) a mixture of at least one polyamine with a functionality of at least 2 and at least one polyol with a functionality of at least 2.

The functionality of the polyamines and polyols is preferably 2 or 3, and more preferably 2. In one embodiment the chain extender component (B) can comprise low-molecular-weight compounds with a molar mass of 60 to 490 g/mol, preferably 62 to 400 g/mol, and particularly preferably 62 to 300 g/mol.

Suitable polyamines are (cyclo)aliphatic diamines, for example isophoronediamine, ethylenediamine, 1,2-propylenediamine, 1,3-propylenediamine, N-methylpropylene-1,3-diamine, N,N'-dimethylethylenediamine, and aromatic diamines, for example 4,4'-methylenebis (2-chloroaniline), 2,4-toluenediamine and 2,6-toluenediamine, 6-methyl-2,4-bis(methylthio)phenylene-1,3-diamine and 2-methyl-4,6-bis(methylthio)phenylene-1,3-diamine, 3,5-diethyl-2,4-toluenediamine, and 3,5-diethyl-2,6-toluenediamine, and primary mono-, di-, tri-, or tetraalkyl-substituted 4,4'-diaminodiphenylmethanes.

In preferred embodiments 4,4'-methylenebis (2-chloroaniline) is excluded from the chain extenders according to i) and ii).

The at least one polyamine is preferably selected from the group consisting of isophoronediamine, 6-methyl-2,4-bis(methylthio)phenylene-1,3-diamine and 2-methyl-4,6-bis(methylthio)phenylene-1,3-diamine.

Suitable polyols are diols, such as ethanediol, 1,2-ethanediol, 1,2-propanediol, 1,3-propanediol, 1,2-butanediol, 1,3-butanediol, 1,4-butanediol, 1,5-pentanediol, 2,2-dimethylpropane-1,3-diol, 2-butyl-2-ethyl propane-1,3-diol, 2-methyl-2,4-pentane diol, 2-ethyl-1,3-hexane diol, 2-methyl-1,3-propane diol, 1,5-hexanediol, 1,6-hexanediol, 1,8-octanediol, 1,10-decanediol, 1,12-dodecanediol, 2,2,4,4-tetramethylcyclobutane-1,3-diol, 1,3-cyclopentanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, isosorbide, triisopropanolamine, glycerol monoesters, glycerol monoethers, trimethylolpropane monoesters, trimethylolpropane monoethers, pentaerythritol diesters, pentaerythritol diethers, and alkoxylated derivatives of any of these, diethylene glycol, triethylene glycol, tetraethylene glycol, higher poly(ethylene glycol), for example having number average molecular weights of from 220 to 2000 g/mol, dipropylene glycol, tripropylene glycol, and higher poly(propyleneglycols), alkoxylated derivative of a compound selected from the group consisting of a diacid, a diol, and a hydroxy acid, polymeric diol, preferably wherein the polymeric diol is selected from the group consisting of polyethers, polyesters, hydroxy-terminated polyolefins, polyethercopolyesters, polycarbonate-copolyesters, polyoxymethylene polymers, and alkoxylated analogs thereof, diesters of terephthalic acid with glycols having from 2 to 4 carbon atoms, for example bis(ethylene glycol)terephthlate or bis(1,4-butanediol)terephthlate, hydroxyalkylene ethers of hydroquinone, for example 1,4-di(hydroxyethyl)hydroquinone, and ethoxylated bisphenols, and also reaction products of these with ε caprolactone.

The at least one polyol is preferably selected from the group consisting of 1,2-ethanediol, 1,3-propanediol, 1,4-butanediol, 1,5-pentanediol, 1,6-hexanediol, 1,8-octanediol, 1,10-decanediol, 1,12-dodecanediol, diethylene glycol, dipropylene glycol, neopentyl glycol, trimethylolpropane and 1,4-di(hydroxyethyl)hydroquinone and is more preferably selected from the group consisting of 1,3-propanediol, 1,4-butanediol, 1,6-hexanediol and trimethylolpropane.

Relatively small quantities of triols may also be added.

In embodiment ii) the at least one polyol (total amount of the polyols of Component (B)) is used in an maximum amount of preferably 80 wt. %, more preferably 50 wt. %, most preferred 20 wt. % based on the total weight of Component (B).

Embodiment i) is preferred over embodiment ii).

The proportion of component (B), based on the total mass of the polyurethane elastomer is preferably 1 to 20 % by weight, particularly preferably 5 to 15 % by weight, with the provision that the sum of components (A) and (B) in the polyurethane elastomer is 100% by weight.

### Catalvst(s) (C):

Suitable catalysts can optionally be used in the process of the invention. The conventional tertiary amines known from the prior art, e.g. triethylamine, dimethylcyclohexylamine, N-methylmorpholine, N,N'-dimethylpiperazine, 2-(dimethylaminoethoxy)ethanol, diazabicyclo[2.2.2]octane (DABCO), diethylethanolamine, N-cocomorpholine, N,N-diethyl-3-diethylaminopropylamine dimethylbenzylamine, 1,8-Diazabicycloundec-7-ene (DBU),triazabicyclodecene (TBD) and N-methyltriazabyclodecene (MTBD). Organometallic compounds, for example titanium compounds, iron compounds, bismuth compounds, zinc compounds, or tin compounds, for example tin diacetate, tin dioctanoate, tin dilaurate, or the dialkyltin salts of aliphatic carboxylic acids, for example dibutyltin diacetate or dibutyltin dilaurate, are suitable catalysts for the production of PU elastomers. Preferred catalysts are amine compounds and/or organometallic compounds, in particular tin compounds.

The total quantity of catalysts based on the total mass of the polyurethane elastomer is generally about 0 to 5% by weight, preferably 0.0001 to 1% by weight, and particularly preferably 0.0002 to 0.5% by weight.

### Additive(s) D:

Suitable additives may be lubricants, for example fatty acid esters, metal soaps of these, fatty acid amides, fatty acid ester amides, and silicone compounds, anti-foaming agents, rheological agents such as viscosity regulator, jollification agents, antiblocking agents, inhibitors, stabilizers with respect to hydrolysis, UV or other light, heat, and discoloration, flame retardants, dyes, pigments, inorganic and/or organic fillers, and reinforcing agents. Reinforcing agents are in particular fibrous reinforcing materials, e.g. inorganic fibers, where these are produced in accordance with the prior art and can also have been treated with a size.

In a preferred embodiment, additives (D) used in small amounts may also be customary mono-, di-, tri- or polyfunctional compounds reactive toward isocyanates in proportions of 0.001 mol% up to 2 mol%, preferably of 0.002 mol% to 1 mol%, based on the total molar amount of component (A), for example as chain terminators, auxiliaries or demoulding aids. Examples include alcohols such as methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n-octadecanol, cyclohexanol and stearyl alcohol. Examples of suitable triols are trimethylolethane, trimethylolpropane or glycerol. Suitable higher-functionality alcohols are ditrimethylolpropane, pentaerythritol, dipentaerythritol or sorbitol. Amines such as butylamine and stearylamine or thiols.

The total quantity of additives based on the total mass of the polyurethane elastomer is generally about 0 to 5 % by weight, preferably 0 to 3 % by weight, and particularly preferably 0,2 to 1 % by weight.

### Filler(s) (E):

Suitable filler are preferable mineral filler selected from the group consisting of CaCO₃, SiO₂, Al(OH)₃, Al₂O₃, CaO, MgO, Na₂O, K₂O, B₂O₃, Fe₂O₃, P₂O₅, zirconia, cerium oxide, TiO₂, silicates, in particular sodium silico-aluminate, calcium silicate, magnesium silicate, mixtures thereof as well hydrated modifications of the mentioned fillers.

The at least one filler which is used according to the present invention has preferably a particle size of 1 to 10 µm, particularly preferably 2 to 8 µm, for example 5 µm.

The total quantity of fillers based on the total mass of the polyurethane elastomer is generally 0 to 30 % by weight, preferably 0 to 20 % by weight, and particularly preferably 0 to 10 % by weight.

Components (A) and (B) are used in a molar ratio of isocyanate-groups of component (A) to isocyanate-reactive groups of component (B) of preferably 0.90 to 1.10 and more preferably 0.95 to 1.05.

The polyurethane elastomer used according to the present invention is obtained from the components as mentioned before. The preparation of the polyurethane elastomer is in general known to the skilled artisan in the art. The polyurethane elastomer can be obtained as follows:
In a preferred embodiment component (A) is provided in a suitable reactor and component (B), optionally (C), optionally (D) and optionally (E) are added to component (A), wherein components (C), (D) and (E) can be added, independently of each other, before or after component (B) is added or in admixture with component (B).

In an preferred embodiment of the foregoing embodiment component (A) is preheated at 60 to 100°C, preferably 60 to 85°C, before components (B) optionally (C), optionally (D) and optionally (E) are added.

The provision, the measuring and the metering of the single components (A) to (E) can be done by any method that is known to the skilled artisan, for example by hand, with the use of a balance, by syringes, pumps, automatic weighing in the reactor, low pressure dispensing machine etc.

After all components (A), (B), optionally (C), (D) and (E) are present in the reactor, preferably under an inert atmosphere, mixing is done for a time of for example 10 seconds to 3 minutes, preferably 30 to 90 seconds. In parallel to the mixing or after the mixing, the mixture is preferably degassed in a vacuum chamber, in particular according to methods known to the skilled artisan, until the mixture is bubble free, for example for 10 seconds to 2 minutes. Next, the mixture is preferably poured into an open or closed mold, preferably at a temperature of 20 to 120 °C, and then cured for 0.1 to 48 hours, preferably at a temperature of 20 to 120 °C. The mold as such is also known to the skilled artisan.

The polyurethane elastomer is preferably demolded after a certain demolding time, for example 1 minutes to 2 hours, preferably 1 minute to one hour.

Optionally, a so-called maturation step can then be conducted to complete curing and reticulation. This is for example done by setting the cast polyurethane elastomer for 2 to 14 days at a temperature of 10 to 40 °C at 30 to 70% air humidity.

The polyurethane cast elastomers according to the present invention have good mechanical properties.

The tensile strength of the polyurethane elastomers according to the present invention is at least 40 MPa, preferably at least 45 MPa, each acquired according to DIN 53504 (2009).

The tear strength of the polyurethane elastomers according to the present invention is at least 100 kN/m, preferably at least 120 kN/m, each acquired according to ISO 34-1 (2010).

The elongation of the polyurethane elastomers according to the present invention is at least 600 %, preferably at least700 %, each acquired according to DIN53504 (2009).

The abrasion loss of the polyurethane elastomers according to the present invention is at most 50 mm³, preferably at most 35 mm³, each acquired according to ISO 4649 (2017).

The present application relates to the use of a polyurethane elastomers as described above or the kit-of-parts as described above in pulp and paper applications or in the manufacture of wheels.

The pulp and paper applications, which the elastomers and kit-of parts described above may be used in, are preferably die cutting pads, anvil covers, rollers and zero crush wheels, preferably anvil covers.

Therefore the present application also relates to the use of a polyurethane elastomers as described above or the kit-of-parts as described above in the manufacture of die cutting pads, anvil covers, zero crush wheels, rollers or wheels, preferably in the manufacture of anvil covers.

The present application also relates to die cutting pads, anvil covers, rollers, zero crush wheels and wheels produced by use of a polyurethane elastomer as described above or of a kit-of-parts as described above.

The present application also relates to die cutting pads, anvil covers, zero crush wheels, rollers and wheels, preferably anvil covers, comprising or consisting of a polyurethane elastomer as described above or a kit-of-parts as described above.

The present invention is elucidated by the following examples.

### Examples

| **Commercial name** | **Supplier** | **Type** | **Hydroxyl value or amine number (mgKOH/g)** | **Amine (mmol/g)** | **molecular weight (g/mol)** | **functionality** | **initiate rs** |
|---|---|---|---|---|---|---|---|
| DESMODUR^{®} T80 | Covestro | Toluene-2,4-diisocyanate 80% | - | - | 174,2 | 2 | - |
| | | Toluene-2,6-diisocyanate 20% | | | | | |
| DESMODUR^{®} T100 | Covestro | Toluene-2,4-diisocyanate 100% | - | - | 174,2 | 2 | - |
| DESMODUR^{®} 0118 T | Covestro | 4,4'-Methylene diphenyl diisocyanate : ≥ 99% / 2,4-Methylene diphenyl diisocyanate: ≤ 1% | - | - | 250,25 | 2 | - |
| DESMOPHEN^{®} 20555-1A | Covestro | Polyadipate polyol | 56 | - | - | 2 | Adipic acid |
| DESMOPHEN^{®} 1000 EING. | Covestro | Polyadipate polyol | 112 | - | - | 2 | Adipic acid |
| BAYTEC^{®} XL1705 | Covestro | Dimethylthiotoluenediamine (DMTDA) | 531 | | 214,4 | 2 | - |
| MOCA | Suzhou | 4,4'-Methylenebis(2-chloroaniline) | - | 7,5 | 267,15 | 2 | - |
| CATALYST SD2.4 | Covestro | Tin based catalyst | - | - | - | - | - |

### Test methods:

### Hydroxyl value :

Measurements of Hydroxyl value (mgKOH/g) were done in accordance with norm ISO 4629-2 (2016).

### Mn determination :

The number-average molecular weight (Mn) was determined by gel permeation chromatography (GPC) in tetrahydrofuran at 23°C. The procedure is according to DIN 55672-1: "Gel permeation chromatography, Part 1 - Tetrahydrofuran as eluent" (SECurity GPC System from PSS Polymer Service, flow rate 1.0 ml/min; columns: 2×PSS SDV linear M, 8×300 mm, 5 µm; RID detector). Polystyrene samples of known molar mass are used for calibration. The number-average molecular weight is calculated with software support. Baseline points and evaluation limits are fixed in accordance with DIN 55672 Part 1.

### Isocyanate value :

Measurements of Isocyanate value (%) were done in accordance with ISO 14896:2009

### Isocyanate monomers determination :

Measurements of Isocyanate monomers value (%m) were done in accordance with DIN EN ISO 10283:2007-11 "Determination of monomeric diisocyanates in isocyanate resins".

### Elongation:

Measurements of elongation were done in accordance with DIN 53504 (2009) at a pulling rate of 500 mm/min.

### Tensile strength :

Measurements of the tensile strength were done in accordance with DIN 53504 (2009) at a pulling rate of 500 mm/min.

### Tear resistance :

Measurements of Tear resistance were done in accordance with ISO 34-1 (2010).

### Abrasion :

Measurements of Abrasion were done in accordance with ISO 4649 (2017).

### Preparation of Prepolymers from A to D

### Prepolymer A:

The components were first preheated to 50°C. In a reactor heated to 80°C under stirring and vacuum, 141 g of DESMODUR^{®} T100 and 33g of DESMODUR^{®} T80 were incorporated. 723 g of DESMOPHEN^{®} 20555-1A and 103 g of DESMOPHEN^{®} 1000 EING. were added, the mixture was homogenized during 16 at 80°C. Then the isocyanate value was measured in accordance with ISO 14896:2009 and 4,3% was found. The obtained material was then stored under nitrogen in a container and put aside.

### Prepolymer B:

The components were first preheated to 50°C. In a reactor heated to 80°C under stirring and vacuum, 351 g of DESMODUR^{®} 0118T were incorporated. 432 g of DESMOPHEN^{®} 20555-1A and 216 g of DESMOPHEN^{®} 1000 EING. were added, the mixture was homogenized during 2 hours at 80°C. Then the isocyanate value was measured in accordance with ISO 14896:2009 and 8,0% was found. The obtained material was then stored under nitrogen in a container and put aside.

### Prepolymer C:

The components were first preheated to 50°C. In a reactor heated to 80°C under stirring and vacuum, 331 g of DESMODUR^{®} 0118T were incorporated. 669 g of DESMOPHEN^{®} 20555-1A were added, the mixture was homogenized during 2 hours at 80°C. Then the isocyanate value was measured in accordance with ISO 14896:2009 and 8,2% was found. The obtained material was then stored under nitrogen in a container and put aside.

### Prepolymer D:

The components were first preheated to 50 °C. In a reactor heated to 80°C under stirring and vacuum, 217 g of DESMODUR^{®} 0118T were incorporated. 778 g of DESMOPHEN^{®} 20555-1A were added, the mixture was homogenized during 2 hours at 80°C. Then the isocyanate value was measured in accordance with ISO 14896:2009 and 4,0% was found. The obtained material was then stored under nitrogen in a container and put aside.

The isocyanate monomers of the prepolymers were measured in accordance with ISO 10283:2007 and the values are shown in the table below.

| Prepolymer | A | B | C | D |
|---|---|---|---|---|
| Isocyanate monomers content (in mass %) | 2,7% TDI | 12,1% MDI | 12,2% MDI | 4,0% MDI |

In the state of the art, it is known that MDI prepolymers with standard free monomer content (above 10% approximately) are extended with alcohol chain extenders to avoid too short pot lives, and then not castable products.

### Preparation of polyurethane elastomers

### Example 1 (PU A1 : comparative example):

100 g of Prepolymer A preheated at 80°C was weighted in a flask. 13 g of MOCA was added and the mixture was stirred during 30 seconds to 1 minute. Then vacuum was applied to degas the reaction mixture until bubble free. The mixture was poured into a closed mold at a temperature of 110°C for 30 minutes. Then, the part was demolded and post cured at 110°C for 16 hours.

The sheet was matured 7 days at 23°C and 50% relative humidity.

### Example 2 (PU A2 : comparative example)

100 g of Prepolymer A preheated at 80°C was weighted in a flask. 10,4 g of BAYTEC^{®} XL1705 was added and the mixture was stirred during 30 seconds to 1 minute. Then vacuum was applied to degas the reaction mixture until bubble free. The mixture was poured into a closed mold at a temperature of 110°C for 30 minutes. Then, the part was demolded and post cured at 110°C for 16 hours.

The sheet was matured 7 days at 23°C and 50% relative humidity.

### Example 3 (PU B : comparative example)

0,05 g of CATALYST SD2.4 was weighted in a flask and 8,4 g of BAYTEC XL^{®} B was added. Then 100 g of Prepolymer B preheated at 80°C was weighted and the mixture was stirred during 30 seconds to 1 minute. Then vacuum was applied to degas the reaction mixture until bubble free. The mixture was poured into a closed mold at a temperature of 110°C for 30 minutes. Then, the part was demolded and post cured at 100°C for 24 hours.

The sheet was matured 7 days at 23°C and 50% relative humidity.

### Example 4 (PU C : comparative example)

100 g of Prepolymer C preheated at 80°C was weighted in a flask. 8,6 g of BAYTEC^{®} XL B was added and the mixture was stirred during 30 seconds to 1 minute. Then vacuum was applied to degas the reaction mixture until bubble free. The mixture was poured into a closed mold at a temperature of 110°C for 30 minutes. Then, the part was demolded and post cured at 110°C for 16 hours.

The sheet was matured 7 days at 23°C and 50% relative humidity.

### Example 5 (PU D : according to the invention)

100 g of Prepolymer D preheated at 80°C was weighted in a flask. 9,8 g of BAYTEC^{®} XL 1705 was added and the mixture was stirred during 30 seconds to 1 minute. Then vacuum was applied to degas the reaction mixture until bubble free. The mixture was poured into a closed mold at a temperature of 100°C for 30 minutes. Then, the part was demolded and post cured at 110°C for 24 hours.

The sheet was matured 7 days at 23°C and 50% relative humidity.

### Results : Elastomers properties

| Property | Standard | Unit | PU A1 | PU A2 | PU B | PUC | PU D |
|---|---|---|---|---|---|---|---|
| Tensile strength | DIN 53504 | MPa | 49 | 52 | 52 | 52 | 52 |
| Elongation | DIN 53504 | % | 510 | 660 | 620 | 630 | 750 |
| Tear strength | ISO 34-1 | kN/m | 114 | 107 | 125 | 147 | 130 |
| Abrasion loss | ISO 4649 | mm³ | 35 | 55 | 35 | 30 | 33 |

## Claims

1. Use of a polyurethane elastomer,
obtained from (embodiment I) or obtainable from (embodiment II) the reaction (R_{E}) of
(A) at least one NCO-terminated prepolymer, obtainable or obtained from the reaction (R_{P}) of
(A1) at least one diphenylmethane diisocyanate, optionally modified by urethane- and/or carbodiimide-groups,
(A2) at least one polyadipate polyol, with a number-average molar mass Mn of from 800 to 4000 g/mol, wherein Mn has been determined by gel permeation chromatography as referred to in the specification, and a functionality of 2 to 4,
(A3) optionally at least one lactone-based polyester polyol and
(A4) optionally at least one catalyst and/or at least one additive,
(B) at least one chain extender, which is one of
i) at least one polyamine with a functionality of at least 2, or
ii) a mixture of at least one polyamine with a functionality of at least 2 and at least one polyol with a functionality of at least 2,
(C) optionally at least one catalyst,
(D) optionally at least one additive and
(E) optionally at least one filler,
with the provisio that no polyether carbonate polyols are present in the reaction (R_{E}),
and with the provisio that in embodiment II component (A) has a monomeric diisocyanate content of ≤ 8 weight %, preferably ≤ 6 weight %, determined by gas chromatography with an internal standard to DIN EN ISO 10283:2007-11,
in pulp and paper applications or in the manufacture of wheels.

2. Use of a kit-of-parts, consisting of (embodiment III) or comprising (embodiment IV)
(A) at least one NCO-terminated prepolymer, obtainable or obtained from the reaction (R_{P}) of
(A1) at least one diphenylmethane diisocyanate, optionally modified by urethane- and/or carbodiimide-groups,
(A2) at least one polyadipate polyol, with a number-average molar mass Mn of from 800 to 4000 g/mol, wherein Mn has been determined by gel permeation chromatography as referred to in the specification, and a functionality of 2 to 4,
(A3) optionally at least one lactone-based polyester polyol and
(A4) optionally at least one catalyst and/or at least one additive,
(B) at least one chain extender, which is one of
i) at least one polyamine with a functionality of at least 2, or
ii) a mixture of at least one polyamine with a functionality of at least 2 and at least one polyol with a functionality of at least 2,
(C) optionally at least one catalyst,
(D) optionally at least one additive and
(E) optionally at least one filler,
with the provisio that no polyether carbonate polyols are present in the kit-of-parts,and with the provisio that in embodiment IV component (A) has a monomeric diisocyanate content of ≤ 8 weight %, preferably ≤ 6 weight %, determined by gas chromatography with an internal standard to DIN EN ISO 10283:2007-11,
in pulp and paper applications or in the manufacture of wheels.

3. Use of a polyurethane elastomer according to claim 1 or use of a kit-of-parts according to claim 2, wherein the at least one diphenylmethane diisocyanate, optionally modified by urethane- and/or carbodiimide-groups (A1), is selcted from the group consisting of diphenylmethane-4,4'-diisocyanate (4,4'-MDI), diphenylmethane-2,4'-diisocyanate (2,4'-MDI), diphenylmethane-2,2'-diisocyanate (2,2'-MDI), diphenylmethane-2,4'-diisocyanate (2,4'-MDI)/diphenylmethane-4,4'-diisocyanate (4,4'-MDI) mixtures, urethane-modified liquid diphenylmethane-4,4'-diisocyanates and diphenylmethane-2,4'-diisocyanates and carbodiimide-modified diphenylmethane-2,2'-diisocyanates, diphenylmethane-2,4'-diisocyanates and diphenylmethane-4,4'-diisocyanates.

4. Use of a polyurethane elastomer according to claim 1 or 3 or use of a kit-of-parts according to claim 2 or 3, wherein the at least one at least one polyadipate polyol (A2) is produced from adipic acid and/or at least one adipic acid derivative and from at least one polyhydric alcohol, wherein the at least one polyhydric alcohol is selected from the group consisting of ethylene glycol, diethylene glycol, 1,4-butanediol, 1,5-pentanediol, 1,6-hexanediol, 1,10-decanediol, 1,12-dodecanediol, 2,2-dimethyl-1,3 propanediol (neopentyl glycol), 1,3-propanediol, and dipropylene glycol.

5. Use of a polyurethane elastomer according to any of claims 1, 3 or 4 or use of a kit-of-parts according to any of claims 2, 3 or 4, wherein components (A1), (A2) and optionally (A3) are used in a molar ratio of isocyanate-groups of component (A1) to isocyanate-reactive groups of component (A2) and optionally (A3) of preferably 1.5 to 4 and more preferably 1.6 to 3.

6. Use of a polyurethane elastomer according to any of claims 1 or 3 to 5 or use of a kit-of-parts according to any of claims 2 to 5, wherein the at least one polyamine of chain extender component Bi) or Bii) is selected from the group consisting of isophoronediamine, ethylenediamine, 1,2-propylenediamine, 1,3-propylenediamine, N-methylpropylene-1,3-diamine, N,N'-dimethylethylenediamine, and aromatic diamines, for example 4,4'-methylenebis (2-chloroaniline), 2,4-toluenediamine and 2,6-toluenediamine, 6-methyl-2,4-bis(methylthio)phenylene-1,3-diamine and 2-methyl-4,6-bis(methylthio)phenylene-1,3-diamine, 3,5-diethyl-2,4-toluenediamine, and 3,5-diethyl-2,6-toluenediamine, and primary mono-, di-, tri-, or tetraalkyl-substituted 4,4'-diaminodiphenylmethanes.

7. Use of a polyurethane elastomer according to any of claims 1 or 3 to 6 or use of a kit-of-parts according to any of claims 2 to 6, wherein the at least one polyol of chain extender component Bii) is used in an maximum amount of preferably 80 wt. %, more preferably 50 wt. %, most preferred 20 wt. % based on the total weight of Component (B).

8. Use of a polyurethane elastomer according to any of claims 1 or 3 to 6 or use of a kit-of-parts according to any of claims 2 to 6, wherein component B) consists of polyamines exclusively (embodiment i).

9. Use of a polyurethane elastomer according to any of claims 1 or 3 to 8 or use of a kit-of-parts according to any of claims 2 to 8, wherein the pulp and paper application is the manufacture of die cutting pads, of anvil covers, rollers or zero crush wheels.

10. Die cutting pads, anvil covers, zero crush wheels, rollers or wheels comprising or consisting of a polyurethane elastomer as specified in any of claims 1 or 2 to 8 or a kit-of-parts as specified in any of claims 2 to 8.
